# FASCICULE DE BREVET EUROPEEN

(11) **EP 0 742 950 B1**
(45) Date de publication et mention de la délivrance du brevet: **24.11.1999**
(21) Numéro de dépôt: 95936622.0
(22) Date de dépôt: 27.10.1995
(51) Int. Cl.: H01F 38/42, H02G 3/06

(54) **DISPOSITIF D'ASSEMBLAGE D'UN CABLE SOUPLE DANS UN PASSAGE CYLINDRIQUE ET TRANSFORMATEUR HAUTE TENSION EQUIPE DE TEL DISPOSITIF**
VERBINDUNGSVORRICHTUNG FÜR FLEXIBLES KABEL IN EINER ZYLINDRISCHEN DURCHFÜHRUNG UND HOCHSPANNUNGSTRANSFORMATOR MIT SOLCHER VORRICHTUNG
DEVICE FOR MOUNTING A FLEXIBLE CABLE IN A CYLINDRICAL SLEEVE, AND HIGH-VOLTAGE TRANSFORMER COMPRISING SAME

(30) Priorité: 07.11.1994 FR 9413331
(43) Date de publication de la demande: 20.11.1996
(73) Titulaire: THOMSON TELEVISION COMPONENTS FRANCE, 92100 Boulogne (FR)
(72) Inventeur: COUTUREAU, Thierry, F-92050 Paris-La Défense (FR); THARRADIN, Marguerite, F-92050 Paris-La Défense (FR)
(74) Mandataire: Brykman, Georges
(86) Numéro de dépôt international: FR9501428
(87) Numéro de publication internationale: WO9614646

(56) Documents cités:
- EP-A- 0 461 713
- US-A- 4 789 759
- US-A- 5 276 280

## Description

La présente invention concerne un dispositif d'assemblage mécanique d'un câble souple dans un passage cylindrique permettant de maintenir le câble dans le passage cylindrique contre tout arrachement axial. Parmi les applications de tels dispositifs, l'invention met une importance particulière sur un transformateur haute tension équipé de tels dispositifs en vue de fixer les câbles haute tension aux sorties du transformateur.

Il existe de nombreux dispositifs d'assemblage de câble contre l'arrachement intempestif. Dans le domaine des transformateurs haute tension destinés notamment à l'alimentation de tubes cathodiques, les sorties haute tension (tension d'alimentation, tension de focalisation, etc.) du transformateur sont reliées aux ensembles destinataires au moyen de câbles électriques haute tension. Dans le cas d'un transformateur haute tension destiné aux tubes cathodiques de télévision par exemple, la tension de sortie pour l'alimentation du tube cathodique est de l'ordre de 25 à 30 kVolts, tandis que la tension de sortie de focalisation est de l'ordre de 10 à 12 kVolts. Pour garantir la sécurité d'utilisation, le transformateur haute tension doit comporter une partie tubulaire en saillie, dite cheminée, prolongeant le boîtier isolant du transformateur et dans laquelle est introduit l'un des câbles de sortie haute tension. Afin de garantir la connexion électrique des câbles haute tension aux sorties correspondantes du transformateur haute tension, un dispositif d'assemblage est prévu au niveau des extrémités libres des cheminées.

On connaît par exemple par le brevet européen n° 0 236 642, un transformateur haute tension dont les cheminées coopèrent avec des dispositifs de crochets et d'enclipsage afin d'éviter l'arrachement des câbles haute tension. Le dispositif d'accrochage présente une collerette tronconique qui coopère avec un ergot à l'intérieur de chaque cheminée. Au-delà de la collerette d'accrochage, le dispositif présente une rallonge tubulaire rigide faisant saillie à l'extérieur de la cheminée.

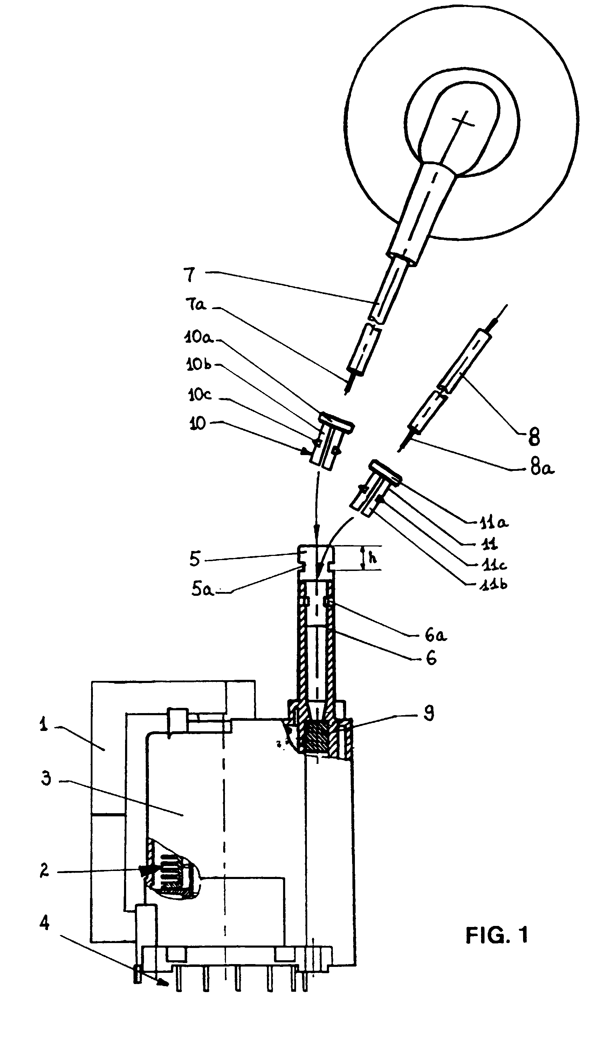

Une autre solution couramment utilisée et qui sera décrite ci-dessous en se référant à la figure 1, consiste à utiliser un clip fendu axialement qui présente deux ergots latéraux extérieurs à mi-hauteur pour coopérer avec des lumières pratiquées sur les cheminées. Cette solution nécessite d'augmenter la longueur des cheminées pour permettre le montage du clip.

Les deux techniques classiques rappelées ci-dessus présentent un premier inconvénient d'augmenter l'encombrement du transformateur haute tension en prolongeant les cheminées de sortie au-delà des longueurs nécessaires de sécurité électrique. Un tel surdimensionnement va à l'encontre du souci constant de rechercher la compacité des produits. En outre, ces techniques ont pour inconvénient d'un démontage difficile du câble, car cela nécessite une déformation radiale importante du câble pour son extraction axiale de la cheminée du transformateur haute tension.

La présente invention a pour objet de proposer une technique d'assemblage de câble qui réduit au minimum le surdimensionnement causé par le dispositif d'assemblage, assure un excellent maintien contre l'arrachement du câble, et permet un montage et démontage facile du câble.

Un autre objet de l'invention consiste à réaliser un dispositif d'assemblage mécanique d'un câble souple dans un passage cylindrique qui permet au câble d'être introduit facilement dans le passage et qui interdit le mouvement inverse du câble, cela pour des câbles électriques ou non électriques.

L'invention a également pour objet un transformateur compact haute tension dont les opérations de montage et démontage des câbles dans les cheminées sont aisés et rapides.

Le dispositif de l'invention permet l'assemblage mécanique d'un câble souple dans un passage cylindrique à l'aide d'un organe de liaison pour maintenir le câble dans le passage cylindrique contre tout arrachement axial. Selon l'invention, l'organe de liaison coopère avec un filetage du passage cylindrique pour d'une part permettre son introduction axiale par encliquetage avant l'introduction du câble, et d'autre part ne permettre son extraction axiale avec le câble qu'après un mouvement de devissage. L'organe de liaison est de préférence réalisé en matière plastique rigide et comporte une tête permettant sa manipulation lors du montage et du démontage dans le passage cylindrique, et une partie tubulaire pourvue de deux fentes axiales diamétralement opposées s'étendant de l'extrémité libre de la partie tubulaire jusqu'au voisinage de la tête.

Selon l'invention, la partie tubulaire de l'organe de liaison comprend au moins deux filets hélicoïdaux dont le diamètre est légèrement supérieur au diamètre du passage cylindrique, de façon à ce que l'introduction axiale de l'organe de liaison sans présence du câble, dans le passage cylindrique, nécessite une déformation élastique radiale de la partie tubulaire, déformation permise par les fentes axiales et facilitée par les pentes des filets de la partie tubulaire et du filetage du passage cylindrique et, à ce que l'extraction de l'organe de liaison avec le câble nécessite le dévissage des filets hélicoïdaux dans le filetage du passage cylindrique.

L'organe de liaison comprend des ergots dont le diamètre intérieur est plus petit que le diamètre du câble, de façon à ce qu'une fois l'organe de liaison mis en place dans le passage cylindrique, l'élasticité radiale de la partie tubulaire et le jeu radiale entre les filets hélicoïdaux et le fond du filetage du passage cylindrique permettent l'introduction du câble dans la partie tubulaire, l'arrachement du câble étant interdit d'une part par les ergots et d'autre part par les pentes des filets de la partie tubulaire et du filetage du passage cylindrique qui tendent à comprimer radialement la partie cylindrique lors du mouvement d'arrachement du câble.

Les ergots sont de préférence constitués par une protubérance circulaire à l'intérieur de la partie tubulaire et séparés en deux parties en regard par les fentes axiales de la partie tubulaire. Les ergots présentent avantageusement une section sous forme de triangle droit dont le côté incliné est orienté de façon à faciliter le centrage du câble lors de son introduction dans la partie tubulaire de l'organe de liaison.

Les filets hélicoïdaux et les ergots de la partie tubulaire de l'organe de liaison sont de préférence situés au même niveau qui correspond sensiblement à la mi-hauteur de la partie tubulaire de l'organe de liaison au plus proche de l'extrémité libre de la partie tubulaire, de façon à profiter de la flexibilité radiale conférée par les fentes axiales de la partie tubulaire.

Etant donné que le démontage de l'organe de liaison ne peut pas se faire par simple arrachement axial et doit au contraire être accompli par un mouvement de dévissage grâce à la coopération entre les filets hélicoïdaux de la partie tubulaire et le filetage du passage cylindrique, on peut aménager un évidement à l'extrémité d'ouverture du passage cylindrique. Cet évidement circulaire doit présenter un diamètre supérieur ou égal au diamètre du fond du filetage du passage, de façon à laisser passer axialement les filets hélicoïdaux de la partie tubulaire de l'organe de liaison. La profondeur de l'évidement doit être telle qu'il suffit d'un ou de deux tours de dévissage de l'organe de liaison pour qu'il puisse être dégagé de l'emprise mécanique du filetage du passage cylindrique. Lorsque les filets hélicoïdaux sont situés sensiblement à mi-hauteur de la partie tubulaire de l'organe de liaison, la profondeur de l'évidement peut-être choisie à environ un tiers de la longueur de la partie tubulaire de l'organe de liaison.

Afin d'éviter le dévissage intempestif de l'organe de liaison dans le passage cylindrique, on peut prévoir au niveau de l'ouverture de réception du passage cylindrique, une butée en saillie axiale qui coopère avec la tête de l'organe de liaison pour le bloquer dans son mouvement angulaire. Cette butée est de préférence flexible radialement afin de permettre le passage forcé de la tête de l'organe de liaison en vue du dévissage intentionnel de ce dernier.

Le dispositif de l'invention peut être utilisé pour l'assemblage de tous type de câble souple dans un passage cylindrique. Dans le domaine de fixation de câble électrique, une application particulièrement intéressante consiste à l'assemblage des câbles haute tension aux sorties d'un transformateur haute tension, car comme nous l'avons indiqué précédemment, l'invention permet de réduire la hauteur des cheminées de sortie du transformateur haute tension afin d'améliorer la compacité du transformateur, tout en permettant un montage et démontage aisé des câbles haute tension.

L'invention sera mieux comprise à l'étude de la description détaillée d'un mode de réalisation particulier pris à titre nullement limitatif et illustré par des dessins annexés, sur lesquels :
la figure 1 est un transformateur haute tension équipée d'un dispositif d'assemblage de câbles haute tension selon l'état de la technique, et
les figures 2a, 2b, et 2c montrent trois étapes de montage d'un câble souple avec le dispositif d'assemblage de l'invention pouvant être appliquée à un transformateur haute tension illustré sur la figure 1.

Sur la figure 1 est représenté un transformateur haute tension comportant un circuit magnétique 1, un bobinage 2 qui est enfermé dans un boîtier 3 en matière plastique rigide et isolante électriquement, des connecteurs électriques 4 sous formes de broches reliées à l'enroulement (non représenté) primaire et éventuellement à l'enroulement secondaire du bobinage 2.

Du fait de la haute tension générée aux sorties du transformateur, il est nécessaire de prévoir des prolongements tubulaires du boîtier isolant 3 en vue de séparer l'emplacement de connexion électrique à la sortie du transformateur avec les autres composants environnant, dans le but d'éviter le contournement électrique avec toutes parties reliées à la masse et d'éviter ainsi des phénomènes électriques parasitaires créés par le transformateur haute tension vis-à-vis d'autres composants électriques aux alentours.

Le transformateur haute tension illustré sur la figure 1 est destiné à l'alimentation d'un tube cathodique. Il comporte deux sorties haute tension, la première est destinée à alimenter l'anode du tube cathodique (non représentée) pour émettre et accélérer un faisceau d'électrons et la seconde est destinée à focaliser le faisceau d'électrons émis par le tube cathodique. Les prolongements tubulaires du boîtier isolant 3 pour délimiter les sorties haute tension du transformateur sont désignés sous le nom de "cheminées". Sur la figure 1, les cheminées 5 et 6 sont associées respectivement à la sortie haute tension d'alimentation et à la sortie haute tension de focalisation. La longueur des cheminées 5 et 6 varient de 20 à 40 mm selon la valeur de la haute tension de sortie du transformateur afin d'assurer la sécurité électrique. La connexion électrique entre les câbles haute tension 7 et 8 et les sorties haute tension du transformateur est assurée au moyen d'une pastille 9 en silicone chargé de poudre conductrice disposée intérieurement et à la base de chaque cheminée 5, 6. La technique de connexion électrique ne sera pas décrite plus en détail ici, il suffit que le lecteur se reporte au brevet européen n° 236 642.

La connexion électrique entre les câbles haute tension 7, 8 et les pastilles conductrices 9 se fait par enfoncement des embouts dénudés 7a, 8a de ces câbles dans les pastilles 9. Pour assurer le maintien des câbles haute tension 7,8 dans les cheminées 5, 6 contre l'arrachement axiales desdits câbles, et donc assurer une connexion électrique fiable desdits câbles aux pastilles conductrices, des clips 10, 11 sont prévues. Chaque clip comporte une tête circulaire 10a, 11a prolongée par une partie tubulaire 10b, 11b fendue axialement. La partie tubulaire 10b, 11b du clip comporte des protubérances radiales extérieures 10c, 11c, qui coopèrent avec des lumières latérales 5a, 6a des cheminées 5, 6.

Pour le montage des câbles haute tension 7, 8, on enfonce d'abord les clips 10, 11 dans les cheminées correspondantes 5, 6 dans le sens indiqué par les flèches, les protubérances latérales 10c, 11c s'encliquetant dans les lumières latérales 5a, 6a des cheminées. On introduit ensuite axialement les câbles haute tension 7, 8 à travers les clips 10, 11 déjà mis en place jusqu'à ce que les embouts dénudés 7a, 8a s'enfoncent dans les pastilles conductrices 9 correspondantes. Des ergots non représentés à l'intérieur de la partie tubulaire 10b, 11b empêchent le mouvement d'arrachement des câbles 7, 8 des cheminées 5, 6.

La solution rappelée ci-dessus qui consiste à utiliser des clips 10, 11 est certes efficace pour empêcher l'arrachement des câbles haute tension 7, 8. Cependant, la technique de clipsage nécessite la coopération entre les protubérances latérales 10c, 11c, et les lumières latérales 5a, 6a et crée une hauteur supplémentaire h afin d'assurer le mécanisme de clipsage. Cette hauteur supplémentaire représente environ 6 mm pour une cheminée de 30 mm de hauteur, ce qui représente un surdimensionnement de 20 % par rapport à la hauteur de sécurité électrique de la cheminée.

De plus, le démontage des câbles haute tension 7, 8 nécessite un effort radial important au travers des lumières latérales 5a, 6a des cheminées 5, 6. Si l'effort radial n'est pas suffisamment grand, l'on n'arrive pas à démonter les câbles 7, 8 avec les clips 10, 11. Si les efforts radiaux sont grands, on risque de détériorer la gaine en caoutchouc des câbles par les ergots internes des clips 10, 11, ce qui risque de détériorer la qualité électrique des câbles haute tension 7,8.

Pour remédier à ces inconvénients, l'invention propose, dans le cadre non limitatif de son application au transformateur haute tension de la figure 1, un dispositif d'assemblage simple, fiable et permettant de supprimer la hauteur supplémentaire h pour les cheminées.

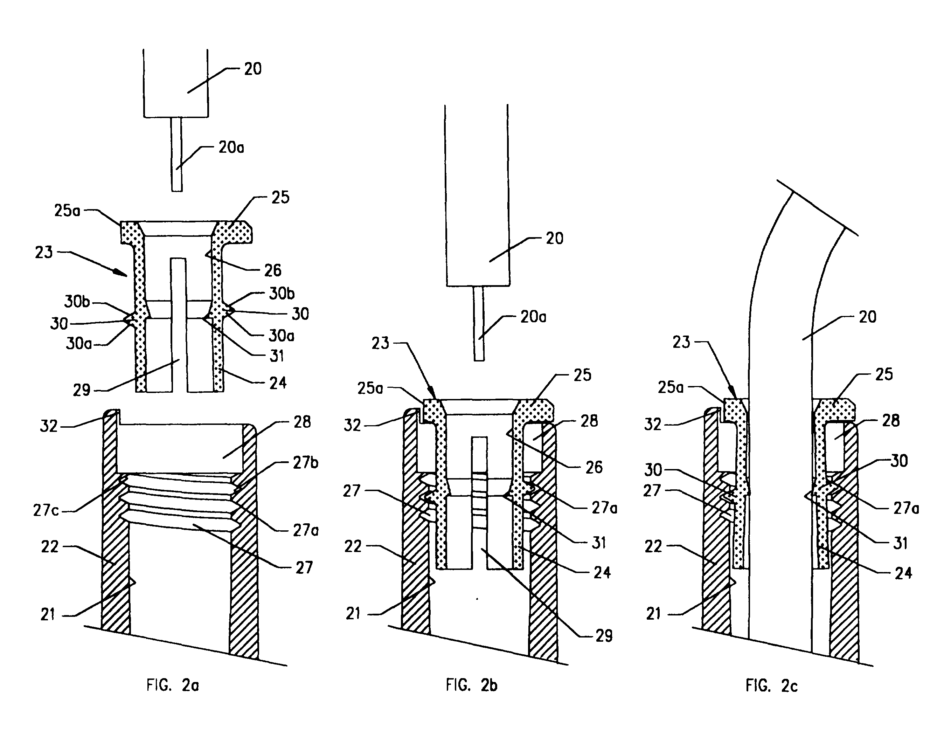

Comme illustré aux figures 2a à 2c, le dispositif de l'invention permet l'assemblage d'un câble souple 20 qui peut être un câble électrique haute tension avec un embout dénudé 20a destiné à la connexion électrique comme les câbles 7 et 8 décrits précédemment. Le câble souple 20 doit être introduit et maintenu dans un passage cylindrique 21 qui peut être la surface intérieure d'une cheminée haute tension 22 du type cheminée 5, 6 décrite précédemment. Un organe de liaison 23 présente une partie tubulaire 24 et une tête 25 sous forme d'un collet radial avec un méplat 25a. L'organe de liaison 23 présente un passage intérieur cylindrique 26 pour recevoir axialement le câble souple 20.

Le passage cylindrique 21 présente un filetage 27 et un évidement cylindrique 28 dont le fond communique avec le filetage 27. Le diamètre de l'évidement cylindrique 28 est supérieur ou égal au fond 27a du filetage 27.

La partie tubulaire 24 de l'organe de liaison 23 comporte deux fentes axiales 29 s'étendant de l'extrémité libre de la partie tubulaire 24 jusqu'au voisinage de la tête 25 de façon diamétralement opposée. Ainsi, la partie tubulaire 24 est séparée en deux parties en regard flexibles radialement. Deux filets hélicoïdaux 30 sont prévus sur les deux parties en regard de la partie tubulaire 24 pour coopérer à la manière de vis-écrou avec le filetage 27 du passage cylindrique 21.

Dans le passage intérieur 26 de la partie tubulaire 24 est prévue une protubérance circulaire 31 séparée en deux par les fentes axiales 29 et présentant une section de triangle droit dont le côté incliné facilite le centrage du câble 20 lors de son introduction dans le passage intérieur 26 de l'organe de liaison 23. L'extrémité de la cheminée 22 présente une butée angulaire 32 en saillie axiale pour coopérer avec le méplat 25a de la tête 25 de l'organe de liaison 23.

Les opérations de montage et de démontage du dispositif de l'invention sont très simples. On introduit axialement l'organe de liaison 23 dans le passage cylindrique 21 de la cheminée 22 en prenant soin d'orienter correctement le méplat 25a par rapport à la butée angulaire 32. Le diamètre extérieur des filets 30 est légèrement supérieur au diamètre du passage cylindrique 21 pour que l'introduction de l'organe de liaison 23 dans le passage 21 se face à la façon d'un clip. Les pentes des surfaces inférieures 30a des filets 30 et des surfaces supérieures 27b du filetage 27 favorisent le centrage de la partie tubulaire 24 et force les deux parties séparées de la partie tubulaire 24 à se rapprocher radialement grâce à la flexibilité conférée par les fentes axiales 29. Le mouvement axial d'introduction de l'organe de liaison 23 est arrêté par la tête 25 qui bute axialement sur l'extrémité supérieure de la cheminée 22 (figure 2b). Dans cette position, les filets 30 sont logés dans le filetage 27 et ne subissent plus de contraintes radiales.

Une fois l'organe de liaison 23 mis en place dans le passage cylindrique 21, on introduit le câble souple 20 axialement dans le passage intérieur 26 de l'organe de liaison 23. Etant donné que le diamètre du câble est inférieur au diamètre du passage intérieur 26 et supérieur au diamètre intérieur de la protubérance circulaire 31, et que le diamètre extérieur des filetages 30 est inférieur au diamètre du fond 27a du filetage 27, l'introduction axiale du câble 20 provoque un écartement radial des deux parties en regard de la partie tubulaire 24 de l'organe de liaison 23, grâce à la flexibilité conférée par les fentes axiales 29 qui tend à rapprocher radialement les parties en regard de la partie tubulaire 24 de l'organe de liaison 23.

Ainsi le mouvement d'introduction du câble 20 est facilité tandis que le mouvement d'arrachement axial du câble 20 est bloqué. En effet, la protubérance circulaire intérieure 31 présente un angle aigu vers le bas et déforme radialement le câble souple 20. Le mouvement d'arrachement axial du câble 20 tend à favoriser l'enfoncement de la protubérance circulaire 31 à angle aigu dans le câble. De plus, les surfaces supérieures 30b des filets 30 entrent en butées axiales avec les surfaces inférieures 27c du filetage 27 (figure 2a). Les pentes de ces surfaces 30b et 27c tendent à rapprocher davantage radialement les parties en regard de la partie tubulaire 24, ce qui force les ergots 31 à s'enfoncer dans le câble 20. On obtient ainsi un blocage très efficace du câble 20 dans le passage cylindrique 21 contre tous mouvements d'arrachement intempestifs ou volontaires.

La butée 32 coopère avec le méplat 25a de la tête 25 pour éviter tous mouvements de dévissage de l'organe de liaison 23. Ainsi le dispositif de l'invention assure le maintien efficace du câble 20 dans le passage cylindrique 21.

Pour permettre le démontage du câble 20, on rend la butée 32 flexible radialement de façon à ce que le dévissage forcé de l'organe de liaison 23 soit possible. La présence de l'évidement 28 permet de réduire le nombre de tours nécessaires pour le dévissage de l'organe de liaison 23, et de faciliter également l'introduction de l'organe 23 en réduisant le nombre de pas du filetage 27 à franchir par les filets 30.

Grâce à l'invention, pour l'application au transformateur haute tension, l'invention permet de supprimer la hauteur supplémentaire h qui était nécessaire pour l'accrochage du clip 10, 11 de maintien des câbles. La hauteur des cheminées se trouve ainsi ramenée à sa hauteur nécessaire pour assurer la sécurité électrique. Il en résulte que le transformateur devient plus compact.

## Revendications

1. Dispositif d'assemblage mécanique d'un câble souple (20) dans un passage cylindrique (21), comprenant un organe de liaison (23) pour maintenir le câble dans le passage cylindrique contre tout arrachement axial, caractérisé en ce que l'organe de liaison coopère avec un filetage (27) du passage cylindrique pour d'une part permettre son introduction axiale par encliquetage avant l'introduction du câble (20), et d'autre part ne permettre son extraction axiale avec le câble qu'après un mouvement de dévissage.

2. Dispositif d'assemblage selon la revendication 1, caractérisé en ce que l'organe de liaison (23) est réalisé en matière plastique rigide et comporte une tête (25) et une partie tubulaire (24) pourvue de deux fentes axiales (29) diamétralement opposées s'étendant de l'extrémité libre de la partie tubulaire jusqu'au voisinage de la tête, la partie tubulaire comprenant au moins deux filets hélicoïdaux (30) dont le diamètre est légèrement supérieur au diamètre du passage cylindrique, de façon à ce que l'introduction axiale de l'organe de liaison (23) sans présence du câble, dans le passage cylindrique, nécessite une déformation élastique radiale de la partie tubulaire, déformation permise par les fentes axiales et facilitée par les pentes (30a, 27b) des filets de la partie tubulaire et du filetage du passage cylindrique, et à ce que l'extraction de l'organe de liaison avec le câble nécessite le dévissage des filets hélicoïdaux dans le filetage du passage cylindrique.

3. Dispositif d'assemblage selon la revendication 2, caractérisé en ce que l'organe de liaison (23) comprend des ergots (31) dont le diamètre intérieur est plus petit que le diamètre du câble, de façon à ce qu'une fois l'organe de liaison mis en place dans le passage cylindrique, l'élasticité radiale de la partie tubulaire et le jeu radiale entre les filets hélicoïdaux (30) et le fond (27a) du filetage (27) du passage cylindrique permettent l'introduction du câble dans la partie tubulaire, l'arrachement du câble étant interdit d'une part par les ergots et d'autre part par les pentes (30b, 27c) des filets de la partie tubulaire et du filetage du passage cylindrique qui tendent à comprimer radialement la partie cylindrique lors d'un mouvement d'arrachement du câble.

4. Dispositif d'assemblage selon la revendication 3, caractérisé en ce que les ergots sont constitués par une protubérance circulaire (31) à l'intérieur de la partie tubulaire (24), ladite protubérance circulaire étant séparée en deux parties en regard par lesdites fentes axiales (29) et présentent une section de triangle droit dont le côté incliné facilite le centrage du câble lors de son introduction dans la partie tubulaire.

5. Dispositif d'assemblage selon la revendication 3 ou 4, caractérisé en ce que les filets hélicoïdaux (30) et les ergots (31) sont situés sensiblement à mi-hauteur de la partie tubulaire (24) de l'organe de liaison, et que le passage cylindrique (21) présente à son ouverture de réception du câble un évidement cylindrique (28) dont le diamètre est supérieur ou égal au diamètre du fond du filetage du passage et dont la profondeur correspond à un tiers environ de la longueur de la partie tubulaire de l'organe de liaison.

6. Dispositif d'assemblage selon l'une des revendications 2 à 5, caractérisé en ce que le passage cylindrique présente à son ouverture de réception du câble une butée (32) en saillie axiale coopérant avec la tête (25) de l'organe de liaison afin d'empêcher le dévissage de ce dernier.

7. Dispositif d'assemblage selon la revendication 6, caractérisé en ce que la butée en saillie est flexible radialement de façon à permettre le passage forcé de la tête de l'organe de liaison en vue du dévissage de ce dernier.

8. Dispositif d'assemblage selon la revendication 7, caractérisé en ce que la tête de l'organe de liaison est sous la forme d'un collet radial avec un méplat (25a) dans un plan parallèle à son axe, la butée (32) en saillie coopérant avec le méplat.

9. Transformateur haute tension comprenant un boîtier isolant (3) pourvu de cheminées (22 ; 5, 6) de sortie haute tension équipées du dispositif d'assemblage selon l'une des revendications 1 à 8 pour le montage et le maintien des câbles haute tension (20 ; 7, 8) dans les cheminées.

## Patentansprüche

1. Mechanische Befestigungsvorrichtung eines flexiblen Kabels (20) in einer zylindrischen Durchführung (21) mit einem Befestigungsteil (23) zum Arretieren des Kabels in der zylindrischen Durchführung gegen axiales Herausziehen, dadurch gekennzeichnet, daß das Befestigungsteil mit einem Gewinde (27) der zylindrischen Durchführung zusammenwirkt, um einerseits seine axiale Einführung durch Verriegelung vor der Einführung des Kabels (20) und andererseits sein axiales Herausziehen mit dem Kabel nur nach einer Losschraubbewegung zu ermöglichen.

2. Befestigungsvorrichtung nach Anspruch 1, dadurch gekennzeichnet, daß das Befestigungsteil (23) aus einem starren Kunststoff besteht und einen Kopf (25) und ein röhrenförmiges Teil (24) enthält, das mit zwei diametral gegenüberliegenden axialen Schlitzen (29) versehen ist, die sich von dem freien Ende des röhrenförmigen Teils bis in die Nähe des Kopfes erstrecken, daß das röhrenförmige Teil wenigstens zwei schraubenförmige Stege (30) enthält, deren Durchmesser etwas größer ist als der Durchmesser der zylindrischen Durchführung, derart, daß die axiale Einführung des Befestigungsteils (23) ohne das Kabel in die zylindrische Durchführung eine elastische radiale Verformung des röhrenförmigen Teils erfordert, daß die Verformung durch die axialen Schlitze ermöglicht und durch die Steigungen (30a, 27b) der Stege des röhrenförmigen Teils und des Gewindes der zylindrischen Durchführung erleichtert wird, und daß das Herausziehen des Befestigungsteils mit dem Kabel das Losschrauben der schraubenförmigen Stege in dem Gewinde der zylindrischen Durchführung erfordert.

3. Befestigungsvorrichtung nach Anspruch 2, dadurch gekennzeichnet, daß das Befestigungsteil (23) Vorsprünge (31) enthält, deren lnnendurchmesser kleiner ist als der Durchmesser des Kabels, derart, daß dann, wenn das Befestigungsteil einmal in der zylindrischen Durchführung plaziert ist, die radiale Nachgiebigkeit des röhrenförmigen Teils und das Radialspiel zwischen den schraubenförmigen Stegen (30) und dem Kern (27a) des Gewindes (27) der zylindrischen Durchführung die Einführung des Kabels in das röhrenförmige Teil ermöglicht, daß das Herausziehen des Kabels einerseits durch die Vorsprünge und andererseits durch die Steigungen (30b, 27c) der Stege des röhrenförmigen Teils und durch das Gewinde der zylindrischen Durchführung verhindert wird, die eine radiale Komprimierung des zylindrischen Teils aufgrund einer Herausziehbewegung des Kabels bewirken.

4. Befestigungsvorrichtung nach Anspruch 3, dadurch gekennzeichnet, daß die Vorsprünge durch eine kreisförmige Erhebung (31) im Inneren des röhrenförmigen Teils (24) gebildet sind, daß die kreisförmige Erhebung durch die axialen Schlitze (29) in zwei Teile getrennt ist und einen dreieckförmigen Querschnitt aufweist, dessen schräge Seite die Zentrierung des Kabels bei seiner Einführung in das röhrenförmige Teil erleichtert.

5. Befestigungsvorrichtung nach Anspruch 3 oder 4, dadurch gekennzeichnet, daß die schraubenförmigen Stege (30) und die Vorsprünge (31) im wesentlichen bei der halben Höhe des röhrenförmigen Teils (24) des Befestigungsteils liegen und daß die zylindrische Durchführung (21) an ihrer zur Aufnahme des Kabels dienenden Öffnung eine zylindrische Aussparung (28) aufweist, deren Durchmesser kleiner oder gleich dem Durchmesser des Kerns des Gewindes der Durchführung ist und deren Tiefe ungefähr einem Drittel der Länge des röhrenförmigen Teils des Befestigungsteils entspricht.

6. Befestigungsvorrichtung nach einem der Ansprüche 2 bis 5, dadurch gekennzeichnet, daß die zylindrische Durchführung an ihrer Öffnung zur Aufnahme des Kabels einen axial vorspringen Anschlag (32) aufweist, der mit dem Kopf (25) des Befestigungsteils zusammenwirkt, um das Losschrauben des letzteren zu verhindern.

7. Befestigungsvorrichtung nach Anspruch 6, dadurch gekennzeichnet, daß der vorspringende Anschlag derart radial nachgiebig ist, daß der stramme Durchtritt des Kopfes des Befestigungsteils für ein Losschrauben des letzeren ermöglicht wird.

8. Befestigungsvorrichtung nach Anspruch 7, dadurch gekennzeichnet, daß der Kopf des Befestigungsteils die Form eines radial weisenden Flansches mit einer Abflachung (25a) in einer Ebene parallel zu seiner Achse hat und daß der vorspringende Anschlag (32) mit der Abflachung zusammenwirkt.

9. Hochspannungstransformator mit einem Isoliergehäuse (3) mit Schornsteinen (22; 5, 6) für den Hochspannungsausgang, ausgerüstet mit einer Befestigungsvorrichtung nach einem der Ansprüche 1 bis 8 für die Anbringung und die Arretierung der Hochspannungskabel (20; 7, 8) in den Schornsteinen.

## Claims

1. Mechanical device for mounting a flexible cable (20) in a cylindrical sleeve (21), comprising a linking piece (23) for holding the cable in the cylindrical sleeve so as to prevent any axial pull-out, characterized in that the linking piece interacts with a threading (27) in the cylindrical sleeve so as, on the one hand, to allow it to be inserted axially, by snap-fastening, before the cable (20) is inserted and, on the other hand, to allow it to be extracted axially with the cable only after an unscrewing movement.

2. Mounting device according to Claim 1, characterized in that the linking piece (23) is made of a rigid plastic and comprises a head (25) and a tubular part (24) provided with two diametrically opposed axial slots (29) extending from the free end of the tubular part as far as a point close to the head, the tubular part including at least two helical threads (30), the diameter of which is slightly greater than the diameter of the cylindrical sleeve, so that the axial insertion of the linking piece (23), when the cable is not present, into the cylindrical sleeve requires a radial elastic deformation of the tubular part, which deformation is permitted by the axial slots and is facilitated by the slopes (30a, 27b) of the threads on the tubular part and of the threading in the cylindrical sleeve, and so that extraction of the linking piece with the cable requires the helical threads to be unscrewed from the threading in the cylindrical sleeve.

3. Mounting device according to Claim 2, characterized in that the linking piece (23) includes spurs (31), the internal diameter of which is smaller than the diameter of the cable, so that once the linking piece has been installed in the cylindrical sleeve the radial elasticity of the tubular part and the radial clearance between the helical threads (30) and the root (27a) of the threading (27) in the cylindrical sleeve allow the cable to be inserted into the tubular part, cable pull-out being prevented, on the one hand, by the spurs and, on the other hand, by the slopes (30b, 27c) of the threads on the tubular part and of the threading in the cylindrical sleeve which tend to radially compress the cylindrical part during a cable pull-out movement.

4. Mounting device according to Claim 3, characterized in that the spurs consist of a circular protuberance (31) inside the tubular part (24), the said circular protuberance being separated into two facing parts by the said axial slots (29) and have a cross section in the form of a right-angled triangle, the inclined side of which makes it easy to centre the cable when inserting it into the tubular part.

5. Mounting device according to Claim 3 or 4, characterized in that the helical threads (30) and the spurs (31) are located approximately halfway down the tubular part (24) of the linking piece and in that the cylindrical sleeve (21) has, at its opening for receiving the cable, a cylindrical recess (28), the diameter of which is greater than or equal to the diameter of the root of the threading in the sleeve and the depth of which corresponds to approximately one third of the length of the tubular part of the linking piece.

6. Mounting device according to one of Claims 2 to 5, characterized in that the cylindrical sleeve has, at its opening for receiving the cable, an axially projecting stop (32) which interacts with the head (25) of the linking piece so as to prevent the latter from being unscrewed.

7. Mounting device according to Claim 6, characterized in that the projecting stop is radially flexible so as to allow forcible passage of the head of the linking piece for the purpose of unscrewing the latter.

8. Mounting device according to Claim 7, characterized in that the head of the linking piece is in the form of a radial flange with a flat (25a) in a plane parallel to its axis, the projecting stop (32) interacting with the flat.

9. High-voltage transformer comprising an insulating case (3) provided with high-voltage output chimneys (22; 5, 6) fitted with the mounting device according to one of Claims 1 to 8 for fitting the high-voltage cables (20; 7, 8) into the chimneys and for holding them therein.
